# FASCICULE DE BREVET EUROPEEN

(11) **EP 4 030 109 B1**
(45) Date de publication et mention de la délivrance du brevet: **07.02.2024**
(21) Numéro de dépôt: 22151503.4
(22) Date de dépôt: 14.01.2022
(51) Int. Cl.: F24F 3/044, F24F 12/00, F24F 13/20, F24F 13/22

(54) **DISPOSITIF DE RENOUVELLEMENT ET DE TRAITEMENT D'AIR**
LUFTERNEUERUNGS- UND -AUFBEREITUNGSGERÄT
DEVICE FOR AIR RENEWAL AND TREATMENT

(30) Priorité: 18.01.2021 FR 2100461
(43) Date de publication de la demande: 20.07.2022
(73) Titulaire: Eurevia, 13600 La Ciotat (FR)
(72) Inventeur: LOYER, David, 83270 SAINT-CYR-SUR-MER (FR)
(74) Mandataire: Med'inVent Consulting

(56) Documents cités:
- WO-A1-2018/149425
- CN-A- 110 529 962
- CN-U- 208 952 277

## Description

### Domaine technique

La présente invention se rapporte de manière générale au domaine du confort énergétique. Elle concerne en particulier un dispositif de renouvellement et de traitement d'air dans un bâtiment.

### Arrière-Plan Technologique

De tels dispositifs de renouvellement et de traitement d'air comportent généralement deux modules distincts permettant le renouvellement de l'air d'une part, et le refroidissement et/ou chauffage de l'air d'autre part, dans tout type de constructions ou bâtiments.

La fonction de refroidissement ou de chauffage est assurée par ledit dispositif en recyclant l'air ambiant vers au moins un échangeur thermique afin de refroidir ou de chauffer l'air. Par la suite, cet air refroidi ou chauffé est insufflé à l'intérieur de la construction ou du bâtiment. Pour exemple, la demande de brevet chinois CN 110 529 962 A et le modèle d'utilité CN 208 952 277 U divulguent des dispositifs sous forme d'armoire disposant d'un échangeur thermique double flux. Il est ainsi question d'un échange thermique entre un air entrant et un air vicié ou recyclé.

La demande de brevet européen EP 909 926 A1 divulgue un dispositif de climatisation disposant de deux échangeurs thermiques couplés par un circuit caloporteur et un compresseur. Chaque échangeur peut être utilisé comme condenseur ou évaporateur. Le dispositif comporte en outre des cloisons mobiles pour permettre la mise en oeuvre de différents modes de circulation d'air.

Parallèlement à cette fonction de refroidissement et/ou de chauffage, un tel dispositif améliore la qualité de l'air intérieur de ladite construction ou dudit bâtiment par un système de ventilation et de filtration :
- la ventilation permet de renouveler l'air annihilant toute stagnation de l'air ainsi que les odeurs et l'humidité excessive ;
- la filtration, quant à elle, permet à la fois de protéger le dispositif de tous polluants susceptibles d'endommager et/ou limiter les performances dudit dispositif, d'assainir et d'épurer l'air qui est insufflé dans ladite construction ou ledit bâtiment.

L'intérêt d'un tel dispositif tout-en-un intégré est d'assurer aux usagers des conditions d'hygiène respectant la réglementation en vigueur ainsi qu'un certain niveau de confort thermique à travers un fonctionnement énergétiquement optimisé.

À titre d'exemple, la demande de brevet européenne EP 3 124 884 A1 divulgue un tel dispositif de renouvellement et de traitement d'air comportant une unité de traitement climatique, une unité de traitement d'air et une pluralité de conduits d'air combinés en un module unique. Lesdites deux unités sont disposées l'une à la suite de l'autre et les conduits d'air sont placés en enfilade dans le sens de la longueur dudit dispositif. À cet effet, un tel dispositif est généralement agencé selon une structure allongée présentant une longueur conséquente.

Une telle structure présente l'inconvénient d'utiliser une surface au sol sensiblement importante destinant ledit dispositif à être installé notamment dans un plénum situé au-dessus d'un faux-plafond. À cet effet, l'utilisation d'un tel dispositif est limitée à des constructions ou des bâtiments ayant la possibilité de disposer d'un tel plénum ou d'une surface au sol suffisante à la mise en place dudit dispositif. Ainsi, une telle structure ne peut convenir à tout type de construction ou de bâtiment. De plus, dans le cas d'un positionnement d'un tel dispositif dans un faux-plafond, il peut se poser la problématique de l'accessibilité en hauteur nécessitant la présence d'un faux-plafond démontable ou d'un faux-plafond disposant de plusieurs trappes conséquentes.

Le document WO 2018/149425 A1 montre également un dispositif de renouvellement et de traitement de l'air avec une zone haute divisée en deux compartiments, une zone basse et deux échangeurs thermiques dont un réchauffant et/ou refroidissant un mélange d'air et l'autre étant un échangeur thermique à double flux récupérant l'énergie d'un air vicié entrant par une entrée d'air vicié.

### Résumé de l'invention

La présente invention vise à remédier aux inconvénients précités, notamment à améliorer la compacité d'un tel dispositif. Ainsi, l'invention divulgue un dispositif de renouvellement et de traitement de l'air comportant une structure tridimensionnelle compacte en proposant un système replié sur lui-même avec des conduits d'air positionnés en parallèle des échangeurs thermiques. Un tel dispositif est destiné à être placé comme une armoire murale verticale offrant un gain de place certain. Une telle structure peut présenter des dimensions en termes de largeur et de profondeur de moins de six cents millimètres, équivalentes par exemple au format d'un appareil électroménager de type lavelinge afin de faciliter son encastrement dans tout type de construction ou de bâtiment.

À cet effet, l'invention propose un dispositif de renouvellement et de traitement de l'air comportant des premier et deuxième échangeurs thermiques ainsi qu'une pluralité de conduits d'air et présentant une structure tridimensionnelle comportant au moins :
- une zone haute divisée verticalement en au moins des premier et deuxième compartiments ;
- une zone basse divisée verticalement en au moins des troisième et quatrième compartiments ;
- ledit premier compartiment comportant le premier échangeur thermique et une sortie d'air traitée ;
- ledit troisième compartiment comportant au moins un conduit d'air auquel est connectée une entrée d'air recyclée et communicant fluidiquement avec ledit premier compartiment ;
- ledit quatrième compartiment comportant le deuxième échangeur thermique ;
- ledit deuxième compartiment comportant un premier conduit d'air auquel est connectée une entrée d'air neuf et un deuxième conduit d'air auquel est connectée une entrée d'air vicié et communicant fluidiquement avec ledit quatrième compartiment ;
- le premier échangeur thermique étant un échangeur thermique à tubes réchauffant et/ou refroidissant un mélange d'air provenant du troisième compartiment et ledit mélange étant ensuite insufflé par la sortie d'air traitée ;
- le deuxième échangeur thermique étant un échangeur thermique à double flux récupérant l'énergie d'un air vicié entrant par ladite entrée d'air vicié pour réchauffer et/ou refroidir un air neuf entrant par l'entrée d'air neuf ;
- le mélange d'air provenant du troisième compartiment correspondant à un mélange de l'air neuf provenant du deuxième échangeur thermique et d'un air recyclé provenant de l'entrée d'air recyclé.

Afin de contourner le deuxième échangeur thermique, la zone basse du dispositif peut comporter en outre un cinquième compartiment. Un tel cinquième compartiment est disposé en parallèle des troisième et quatrième compartiments. Ledit cinquième compartiment constitue un conduit de dérivation d'air neuf provenant du premier conduit d'air relié à l'entrée d'air neuf. Cela permet d'assurer une communication directe entre le deuxième et le troisième compartiments court-circuitant le deuxième échangeur thermique, l'ouverture et/ou la fermeture dudit conduit de dérivation étant pilotée par un clapet.

Selon un autre mode de réalisation, ladite zone basse peut comporter un cinquième compartiment, disposé en parallèle des troisième et quatrième compartiments, et constituant un conduit de dérivation d'air vicié provenant du deuxième conduit d'air relié à l'entrée d'air vicié. L'air vicié est ainsi acheminé vers un troisième conduit d'air relié à une sortie d'air vicié connectée au deuxième compartiment. Cela évite le passage de l'air vicié dans le deuxième échangeur thermique.

Selon un mode de réalisation préféré, le dispositif peut comporter un ventilateur d'éjection de l'air vicié vers une sortie d'air vicié connectée au deuxième compartiment. Le dispositif peut comporter en outre un ventilateur d'aspiration de l'air neuf vers le troisième compartiment. Un tel ventilateur d'aspiration de l'air neuf permet de faciliter une liaison fluidique vers le troisième compartiment.

Afin de disposer d'un dispositif modulable, le deuxième compartiment dudit dispositif peut être modulable et permet des raccordements selon l'endroit d'implémentation dudit dispositif. À cet effet, les entrées et/ou sorties d'air connectées auxdits conduits du deuxième compartiment peuvent être positionnées vers le haut, vers l'arrière ou sur le côté à gauche ou à droite.

Selon un mode de réalisation préféré, le premier échangeur thermique peut comporter une résistance électrique de chauffe.

Selon un mode préférentiel, le dispositif peut comporter en outre des première et deuxième unité de récupération des condensats produits respectivement par les premier et deuxième échangeurs thermiques. Dans ce mode de réalisation, afin de mutualiser les éléments constitutifs dudit dispositif, la première unité de récupération des condensats peut disposer d'une sortie pour se déverser dans la deuxième unité de récupération des condensats. Ladite deuxième unité de récupération des condensats, quant à elle, comporte une sortie d'évacuation des condensats vers l'extérieur dudit dispositif.

Selon un autre mode de réalisation, pour réaliser des économies d'énergie et/ou améliorer les performances dudit dispositif, la première unité de récupération des condensats peut être agencée pour se déverser sur le deuxième échangeur thermique.

Afin de faciliter le contrôle des débits d'air, ledit dispositif peut comporter un ventilateur principal. Un tel ventilateur principal permet d'assurer la liaison fluidique entre le troisième et le premier compartiments en acheminant vers le premier échangeur thermique le mélange d'air neuf et d'air recyclé pour éjecter ledit mélange vers la sortie d'air traité connectée au premier compartiment. Ledit air neuf peut provenir du deuxième échangeur thermique ou du conduit de dérivation d'air neuf. Ledit air recyclé, quant à lui, peut provenir de l'entrée d'air recyclé connectée au troisième compartiment.

Selon un mode préférentiel, afin de piloter le dispositif, le premier compartiment peut comporter un panneau de commande. Un tel panneau de commande est positionné entre le premier échangeur thermique et le ventilateur principal.

Afin d'assainir l'air entrant au sein du dispositif, ledit dispositif peut comporter en outre un système de filtration. Un tel système de filtration est positionné entre le troisième et le premier compartiment en amont du ventilateur principal et du premier échangeur thermique.

### Brève description des dessins

L'invention sera mieux comprise et d'autres caractéristiques et avantages de celle-ci apparaîtront à la lecture de la description suivante de modes de réalisation particuliers de l'invention, donnés à titre d'exemples illustratifs et non limitatifs, et faisant référence aux dessins annexés, parmi lesquels :
La figure 1 montre une vue en perspective du dispositif de renouvellement et de traitement de l'air selon l'invention.
La figure 2 montre une vue du côté gauche de la figure 1 en coupe centrale.
La figure 3 montre une vue de face du dispositif selon la coupe AA telle qu'indiquée sur la figure 2.
La figure 4 montre une vue de face du dispositif selon la coupe BB telle qu'indiquée sur la figure 2.
La figure 5 montre une vue de face du dispositif selon la coupe BB telle qu'indiquée sur la figure 2 représentant une variante de la figure 4.
La figure 6 montre une vue de face du dispositif selon la coupe CC telle qu'indiquée sur la figure 2.
La figure 7 montre une vue de face du dispositif selon la coupe DD telle qu'indiquée sur la figure 2.
La figure 8 montre une vue en perspective du dispositif de renouvellement et de traitement de l'air de la figure 1 dans une configuration où les panneaux de fermeture sont enlevés permettant de visualiser les éléments constitutifs dudit dispositif.

### Description détaillée

Afin de simplifier la description, une même référence est utilisée dans différentes figures pour désigner un même objet. Ainsi, lorsque la description cite un objet référencé, cet objet pourra être identifié sur plusieurs figures. En outre, les figures ainsi que la description sont données à titre d'exemples non limitatifs de réalisation.

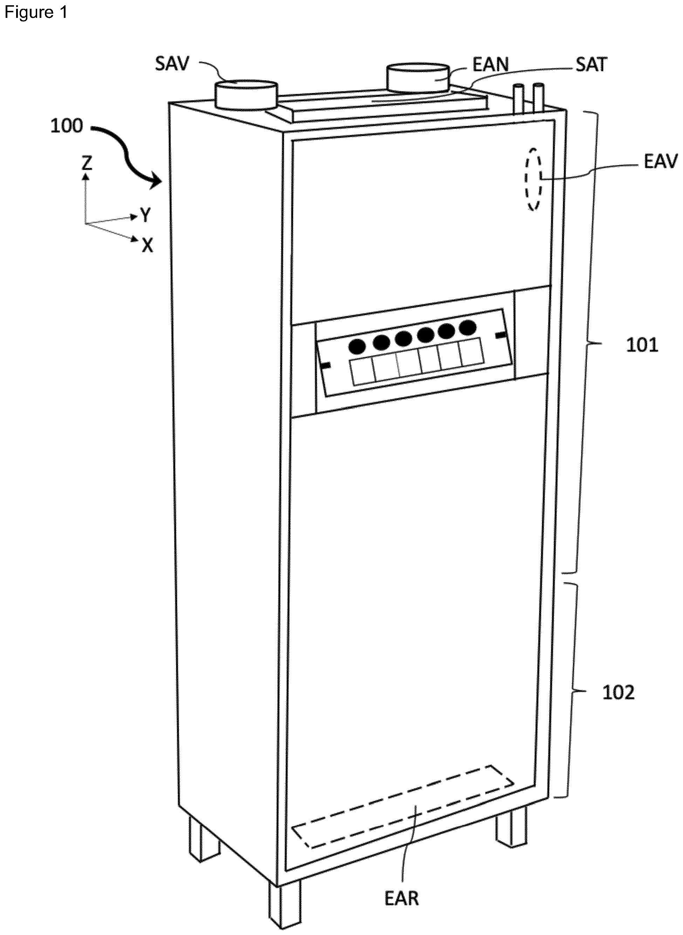

Un exemple de dispositif de renouvellement et de traitement de l'air 100, conforme à l'invention, est représenté sur la figure 1. Un tel dispositif 100 présente une structure tridimensionnelle sensiblement équivalente à une armoire verticale compacte. On définit par rapport audit dispositif 100 un repère orthogonal XYZ comprenant trois axes perpendiculaires deux à deux, à savoir :
- un axe X définissant une direction arrière avant dudit dispositif ;
- un axe Y définissant une direction gauche droite dudit dispositif qui, avec l'axe X, définit un plan XY horizontal, et ;
- un axe Z, définissant une direction verticale, perpendiculaire au plan XY horizontal.

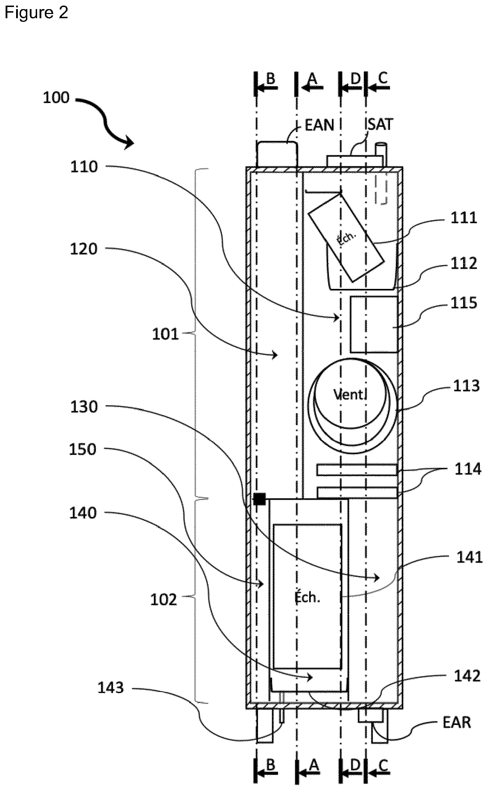

Les figures 1 à 8 représentent un dispositif de renouvellement et de traitement de l'air 100 conforme à l'invention selon différentes vues permettant de visualiser en détail les différentes zones et éléments constitutifs dudit dispositif 100. Ainsi, les figures 2 à 8 vont être décrites conjointement avec la figure 1 dans le reste de la description.

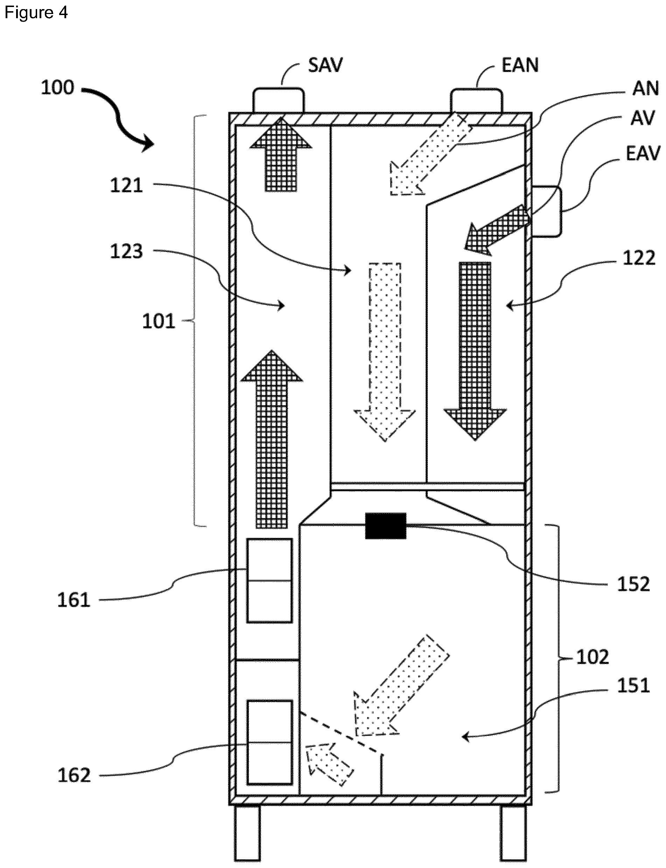

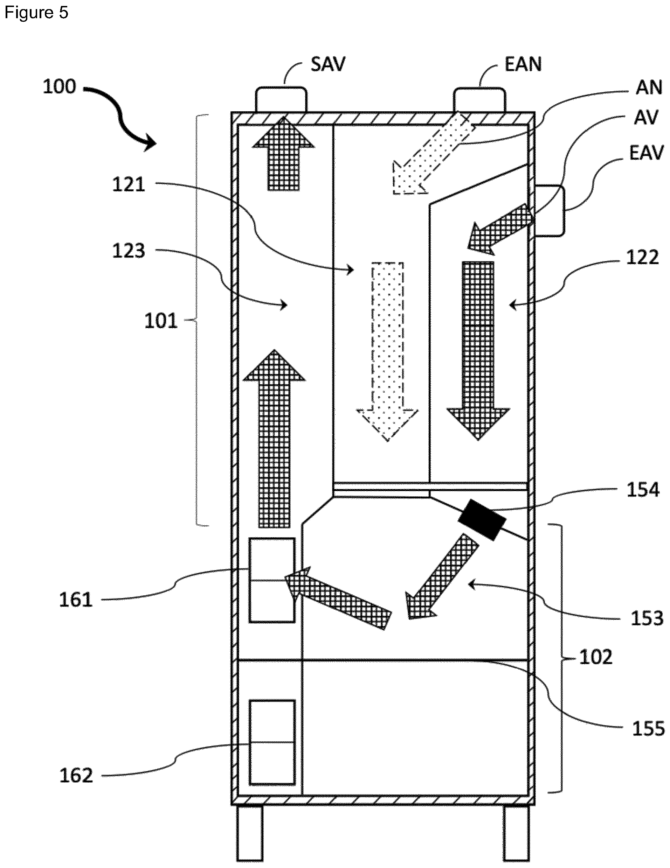

Comme illustré sur la figure 2, le dispositif de renouvellement et de traitement de l'air 100 comporte une zone haute 101 et une zone basse 102. Ladite zone haute 101 est divisée verticalement en un premier compartiment 110 et un deuxième compartiment 120. Ladite zone basse 102 est divisée verticalement en un troisième compartiment 130, un quatrième compartiment 140 et un cinquième compartiment 150. Le cinquième compartiment 150 est optionnel : il se caractérise en un conduit de dérivation d'air 151 ou 153 qui sera décrit plus loin dans la description en lien avec les figures 4 et 5. Cette structuration en compartiments permet de disposer en parallèle des conduits d'air 121, 122, 123 et 131 et des premier 111 et deuxième 141 échangeurs thermiques. Les conduits d'air 121, 122, 123 et 131, adaptés au transport de l'air, sont situés dans les deuxième 120 et troisième 130 compartiments. Les premier 111 et deuxième 141 échangeurs thermiques sont placés respectivement dans les premier 110 et quatrième 140 compartiments. A cette fin, les premier 110, deuxième 120, troisième 130 et quatrième 140 compartiments communiquent fluidiquement deux à deux :
- ledit premier compartiment 110 comportant le premier échangeur thermique 111 communique fluidiquement avec ledit troisième compartiment 130 qui comporte une première partie des conduits d'air 131 ;
- ledit quatrième compartiment 140 comportant le deuxième échangeur thermique 141 communique fluidiquement avec ledit deuxième compartiment 120 qui comporte la deuxième partie des conduits d'air 121, 122 et 123.

Ainsi, contrairement aux structures linéaires, aujourd'hui employées dans les dispositifs de renouvellement et de traitement d'air connus, le dispositif de renouvellement et de traitement de l'air 100 conforme à l'invention présente, quant à lui, une communication d'air repliée sur elle-même rendant le dispositif plus compact et lui donnant plus de souplesse pour les entrées et/ou sorties d'air.

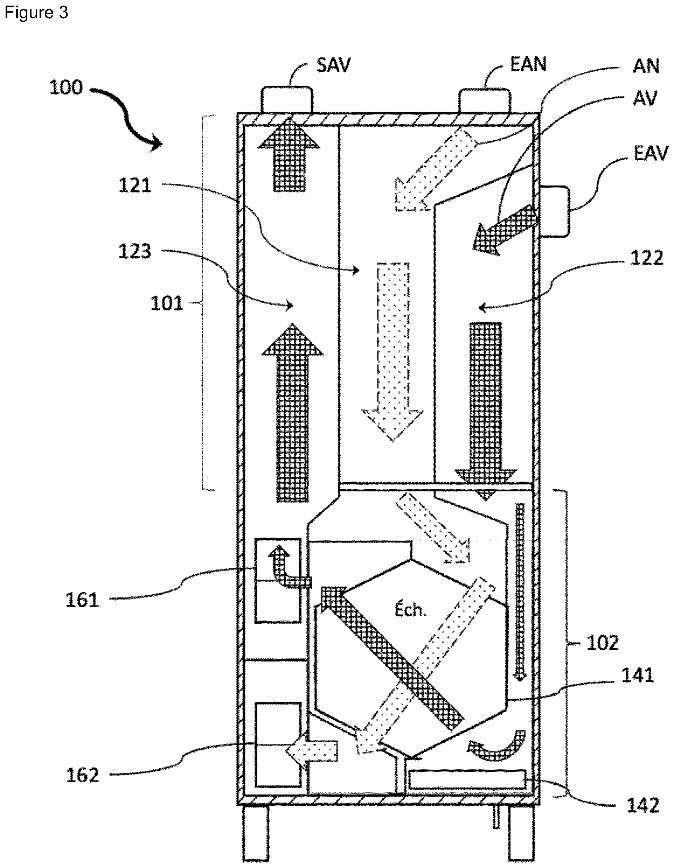

La figure 2 est une vue du côté gauche en coupe centrale dudit dispositif 100 permettant de définir les différents plans de coupe AA, BB, CC et DD repris respectivement dans les figures 3 à 7 définies comme suit :
- La figure 3 présente la coupe AA de la figure 2. La zone haute 101 présentée détaille le deuxième compartiment 120 et la zone basse 102 présentée détaille le quatrième compartiment 140 ;
- La figure 4 présente la coupe BB de la figure 2. La zone haute 101 présentée détaille le deuxième compartiment 120 et la zone basse 102 présentée détaille le cinquième compartiment 150 ;
- La figure 5 présente la coupe BB de la figure 2, représentant une variante de la figure 4. La zone haute 101 présentée détaille le deuxième compartiment 120 et la zone basse 102 présentée détaille le cinquième compartiment 150 ;

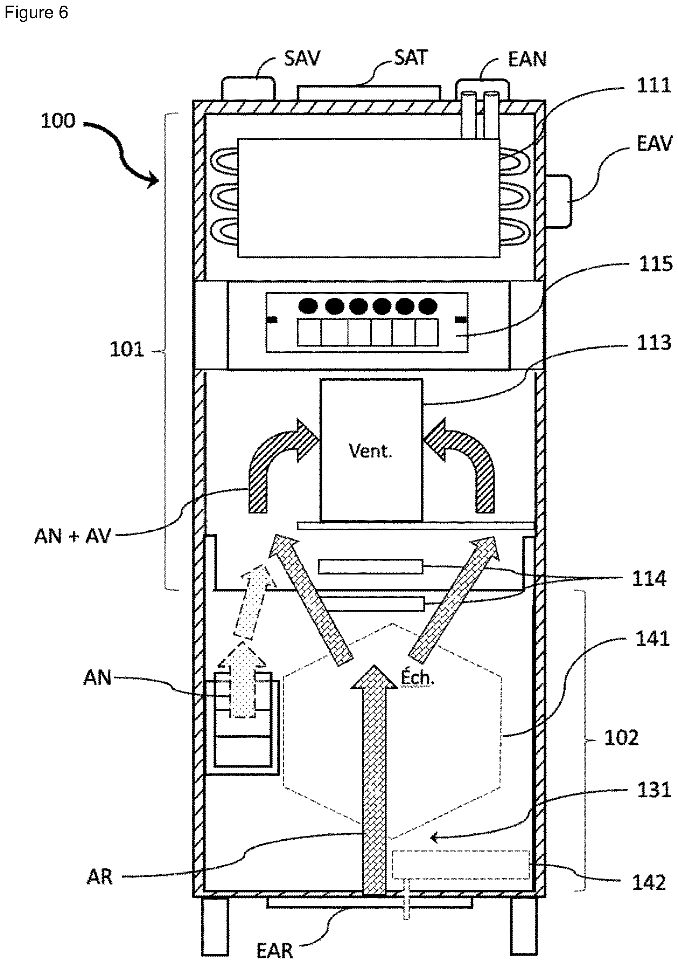

- La figure 6 présente la coupe CC de la figure 2. La zone haute 101 présentée détaille le premier compartiment 110 et la zone basse 102 présentée détaille le troisième compartiment 130 ;

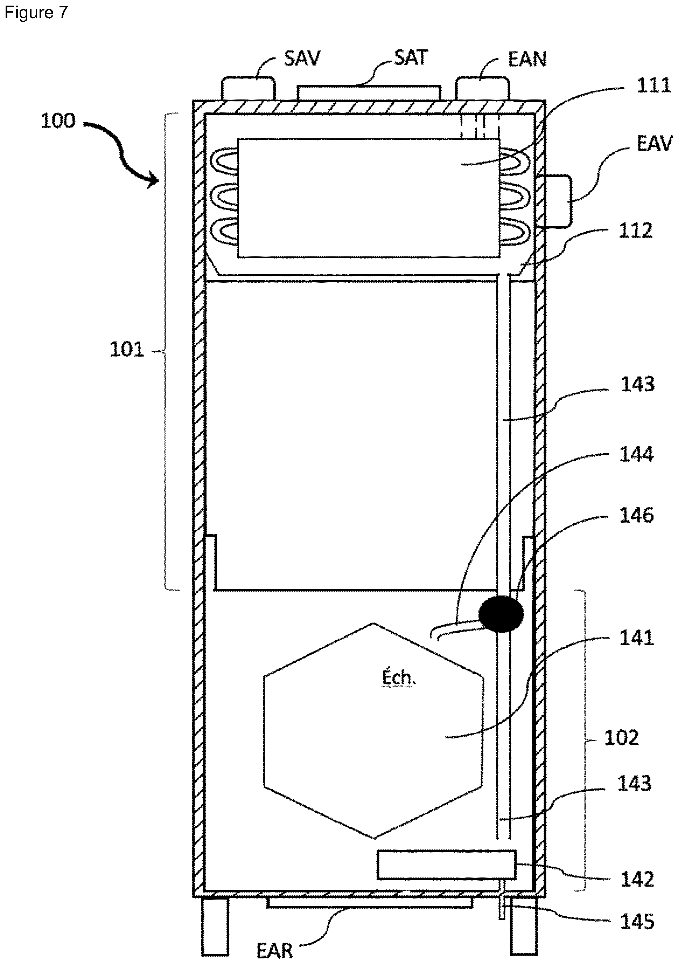

- La figure 7 présente la coupe DD de la figure 2. La zone haute 101 présentée détaille le premier compartiment 110 et la zone basse 102 présentée détaille le quatrième compartiment 140.

Tel qu'illustré en figures 3 et 6, dans un mode de réalisation préféré, ledit dispositif de renouvellement et de traitement d'air 100 conforme à l'invention peut comporter trois entrées d'air EAN, EAR et EAV et deux sorties d'air SAT et SAV connectées chacune à un conduit d'air. À cet effet, comme illustré en figure 3, le deuxième compartiment 120 est découpé selon l'axe Y défini en figure 1, en trois conduits d'air 121, 122 et 123, chaque conduit d'air est raccordé à une entrée EAN ou EAV ou à une sortie d'air SAV. Comme illustré en figure 6, le troisième compartiment 130 et le premier compartiment 110 comportent respectivement une entrée d'air EAR en partie basse et une sortie d'air SAT en partie haute dudit dispositif 100.

Une entrée d'air recyclé EAR, illustrée sur la figure 6, est connectée au troisième compartiment 130 dudit dispositif en partie basse et en position centrale selon l'axe Y défini en figure 1. Au sens de l'invention et dans tout le document, on entend par « air recyclé », également connu sous la dénomination « air repris », l'air à traiter provenant de ladite construction et dudit bâtiment. Ledit air recyclé AR est aspiré au sein dudit dispositif 100 par l'entrée d'air recyclé EAR et est acheminé par un ventilateur 113 vers le premier échangeur thermique 111 à travers le conduit d'air 131 raccordé à l'entrée d'air recyclé EAR.

Une entrée d'air neuf EAN, illustrée en figure 3, est connectée au deuxième compartiment 120 et est placée sur le haut dudit dispositif 100. Au sens de l'invention et dans tout le document, on entend par « air neuf » AN, également connu sous la dénomination « air frais », l'air entrant dans la construction ou le bâtiment et provenant de l'extérieur, par exemple par une prise d'air externe. Ledit air neuf AN est aspiré au sein dudit dispositif 100 par l'entrée d'air neuf EAN et est acheminé vers le deuxième échangeur thermique 141 à travers le conduit d'air 121 raccordé à l'entrée d'air neuf EAN.

Une entrée d'air vicié EAV, illustrée en figure 3, est connectée au deuxième compartiment 120 et est placée sur le côté gauche dudit dispositif 100. Au sens de l'invention et dans tout le document, on entend par « air vicié », également connu sous la dénomination « air à pollution spécifique », l'air ayant déjà « servi » pollué la plupart du temps ou provenant de pièces humides, telles que des salles de bain, des cuisines, des buanderies ou des WC (acronyme pour « Water-Closet » selon une terminologie anglo-saxonne) par exemple, et condamné à être rejeté à l'extérieur de ladite construction ou dudit bâtiment. Ledit air vicié AV est extrait des pièces humides pour être aspiré au sein dudit dispositif 100 par l'entrée d'air vicié EAV et est acheminé vers le deuxième échangeur thermique 141 à travers le conduit d'air 122 raccordé à l'entrée d'air vicié EAV. Cette entrée d'air vicié EAV peut être optionnelle dans le cas notamment d'application pour bureaux du fait que l'air vicié AV provient de pièces ambiantes. Dans ce cas, l'entrée d'air recyclé EAR décrite précédemment peut suffire au fonctionnement du dispositif de renouvellement et de traitement de l'air 100, comme cela est précisé ci-après.

Une sortie d'air vicié SAV, illustrée en figure 3, est connectée au deuxième compartiment 120 et est placée sur le haut dudit dispositif 100 à côté de l'entrée d'air neuf EAN. L'air vicié AV, après avoir circulé à travers le deuxième échangeur thermique 141 est rejeté, à travers le conduit d'air 123 raccordé à la sortie d'air vicié SAV, à l'extérieur de ladite construction ou dudit bâtiment. Dans le cas où l'entrée d'air vicié EAV n'est pas présente, une partie de l'air recyclé AR est acheminée dans le quatrième compartiment 140 pour être utilisée comme un air vicié AV. Comme décrit précédemment, ledit air vicié AV passe à travers le deuxième échangeur thermique 141 et est rejeté par la suite par la sortie d'air vicié SAV. La quantité d'air recyclé AR utilisé et rejeté comme un air vicié AV est contrôlée par ledit dispositif 100, conformément aux réglementations en vigueur associées au type d'application.

Enfin, une sortie d'air traité SAT, illustrée en figure 6, est connectée au premier compartiment 110 et est placée sur le haut et au centre dudit dispositif 100 selon le plan XY défini en figure 1. L'air traité AT est un air chauffé ou refroidi provenant du premier échangeur thermique 111 et composé d'un mélange de l'air neuf AN provenant du deuxième échangeur thermique 141 et de l'air recyclé AR provenant de l'entrée d'air EAR. La sortie d'air traité SAT peut être préférentiellement mais non limitativement gérée par des volets motorisés. De tels conduits d'air 121, 122, 123 et 131, adaptés au transport de l'air, permettent ainsi d'alimenter ledit dispositif 100 en différents flux d'air.

L'invention ne se limite pas au seul positionnement des entrées EAN, EAV et/ou sorties SAV d'air situées dans le deuxième compartiment 120 dudit dispositif 100, décrit précédemment en lien avec la figure 3. À cet effet, ledit deuxième compartiment 120 peut être modulable afin de positionner les entrées EAN, EAV et/ou sorties SAV d'air connectées audits conduits 121, 122, 123, du deuxième compartiment 120 vers le haut, vers l'arrière ou sur le côté à gauche ou à droite dudit dispositif 100. Ainsi, ledit dispositif 100 présente une souplesse de modulation le rendant cloisonnable ou décloisonnable à souhait pour créer des accès ou permettre des raccordements selon l'endroit d'implémentation dudit dispositif 100.

Dans l'idée d'avoir un dispositif le plus compact avec un nombre d'éléments constitutifs le plus restreint possible tout en favorisant le moins de déperditions et tel qu'illustré sur la figure 3, ledit deuxième échangeur thermique 141 peut être un échangeur thermique à double flux permettant de transférer de l'énergie thermique d'un fluide vers un autre alors que ceux-ci présentent des gradients de température différents. En effet, ledit deuxième échangeur thermique 141 double flux récupère l'énergie dégagée par l'air vicié AV, entrant par l'entrée d'air vicié EAV, pour réchauffer et/ou refroidir l'air neuf AN, entrant par l'entrée d'air neuf EAN. Ainsi, un tel deuxième échangeur thermique 141 double flux permet de transférer de l'énergie thermique de l'air vicié AV vers l'air neuf AN au travers d'une surface d'échange conductrice. Ladite surface d'échange garantit la séparation des flux de l'air vicié AV et de l'air neuf AN sans les mélanger, ainsi les deux flux d'air se croisent sans se mélanger. À titre d'exemple préféré mais non limitatif, le deuxième échangeur thermique 141 double flux peut être un échangeur à plaques composé de multiples plaques servant de conducteurs de chaleur. Elles sont disposées en forme de millefeuille et séparées les unes des autres d'un espace de quelques millimètres. Les intervalles entre chacune de ces plaques sont parcourus alternativement par l'air neuf AN et l'air vicié AV. La circulation de l'air neuf AN et de l'air vicié AV à travers les plaques peut se faire par exemple par courants croisés ou contre-courant. Ces plaques sont conçues principalement, mais non limitativement en aluminium, en acier inoxydable ou en matériaux synthétiques et sont généralement à joints, soudées, brasées ou encore assemblées par fusion. L'étanchéité entre chacune de ces plaques doit être maximale afin que l'air vicié AV ne se mélange pas à l'air neuf AN et réciproquement. En variante, l'homme du métier pourra utiliser tout autre type d'échangeur thermique double flux compatible avec l'utilisation qui en est faite au sein dudit dispositif 100, tel que, par exemple, un échangeur rotatif présentant l'avantage connu de ne pas générer de condensation.

De manière optionnelle, telle qu'illustrée en figure 4, introduite précédemment dans la description de la présente invention et afin de contourner ledit deuxième échangeur thermique 141 double flux, ladite zone basse 102 du dispositif de renouvellement et de traitement de l'air 100 conforme à l'invention peut comporter un cinquième compartiment 150 dans le sens vertical, selon l'axe Z défini en figure 1. Ledit cinquième compartiment 150 se trouve ainsi disposé parallèlement au troisième compartiment 130 et au quatrième compartiment 140 dudit dispositif 100. Ledit cinquième compartiment 150 se constitue en un conduit de dérivation 151 de l'air neuf AN, permettant à l'air neuf AN entrant de ne pas passer par le deuxième échangeur thermique 141. Ainsi, selon les températures extérieures à ladite construction ou audit bâtiment équipé d'un tel dispositif 100, il est possible d'utiliser des flux d'air neuf AN extérieurs naturellement chauffés ou refroidis afin de réaliser des économies d'énergies selon une méthode dite de « free cooling », selon une terminologie anglo-saxonne. À cet effet, en période estivale, l'emploi d'un tel circuit de dérivation 151 permet de rafraîchir l'air insufflé dans ladite construction ou ledit bâtiment en évitant de le réchauffer dans le deuxième échangeur thermique 141, lors des nuits fraîches. L'air « frais » présent la nuit va permettre de rafraîchir naturellement l'air insufflé dans ladite construction ou ledit bâtiment.

Selon une variante, tel qu'illustré sur la figure 5, ledit cinquième compartiment 150 peut se constituer en un conduit de dérivation 153 de l'air vicié AV provenant de l'entrée d'air vicié EAV. L'air vicié AV est alors acheminé jusqu'au conduit 123 relié à la sortie d'air vicié SAV connectée au deuxième compartiment 120. Un tel conduit de dérivation 153 permet à l'air vicié AV de ne pas passer par le deuxième échangeur thermique 141 évitant tout échange thermique entre les deux. Pour ce faire, un tel conduit de dérivation peut comporter un cloisonnement 155 pour éviter le passage de l'air vicié AV vers le bas dudit dispositif 100.

À titre d'exemple non limitatif, l'ouverture et/ou la fermeture de tels conduits de dérivation 151 et 153 respectivement de l'air neuf AN et de l'air vicié AV peuvent être pilotées par un clapet respectivement 152 et 154. De manière alternative, l'homme du métier pourra utiliser tout autre type d'éléments permettant l'actionnement de l'ouverture et/ou de la fermeture de tels conduits de dérivation 151 et 153 au sein dudit dispositif 100.

Dans un mode de réalisation préféré tel qu'illustré en figure 6, le premier échangeur thermique 111 est un échangeur thermique à tubes permettant de refroidir et/ou réchauffer un mélange de l'air neuf AN provenant du deuxième échangeur thermique 141 et de l'air recyclé AR provenant de l'entrée d'air recyclé EAR dudit dispositif 100, un tel mélange d'air constituant l'air traité AT. Un tel premier échangeur thermique 111 à tubes est constitué généralement de tubes cylindriques coaxiaux dans lesquels un fluide caloporteur circule. Le mélange d'air à chauffer ou refroidir circule dans l'espace compris entre les tubes. Le transfert de chaleur du fluide caloporteur au mélange d'air s'effectue à travers la paroi que constitue les tubes intérieurs. Ledit air traité AT chauffé ou refroidi est ensuite insufflé par la sortie d'air traité SAT dans ladite construction ou ledit bâtiment à assainir et/ou traiter. À titre d'exemple non limitatif, un tel premier échangeur thermique 111 à tubes peut consister en un échangeur thermique à eau avec deux tubes, à savoir avec une entrée et une sortie d'eau et, en fonction de la température de l'eau, le mélange d'air arrivant sur le premier échangeur thermique 111 va être chauffé ou refroidi. Toutefois, l'invention ne saurait se limiter à la nature du fluide caloporteur utilisé dans l'échangeur thermique à tubes ou même au type d'échangeur thermique à tubes. En variante, l'homme du métier pourra utiliser tout autre type de fluide caloporteur et tout autre type d'échangeur à tubes compatibles avec l'utilisation qui en est faite, tel qu'un échangeur thermique à quatre tubes apportant la possibilité de choisir en permanence entre un réchauffement ou un refroidissement de l'air à traiter.

En complément ou en variante, le premier échangeur thermique 111 peut comporter conjointement ou distinctement une résistance électrique de chauffe. Une telle résistance électrique chauffante est positionnée au sein du premier compartiment 110 parallèlement au premier échangeur thermique 141 selon l'axe Y défini en figure 1. Une telle résistance électrique de chauffe transforme une puissance électrique qu'elle reçoit, en chaleur par effet Joule. Ladite résistance permet de dégager beaucoup de chaleur rapidement facilitant ainsi le réchauffement du mélange d'air neuf AN et d'air recyclé AR passant par le premier échangeur thermique 111. En complément, afin de contrôler l'utilisation d'une telle résistance électrique de chauffe, il est possible de la raccorder à un système qui se charge d'enclencher ou couper sa mise sous tension tel qu'un thermostat électronique. À cet effet, le thermostat électronique va enclencher ou couper le passage du courant dans la résistance électrique chauffante lorsque la température relevée est inférieure ou supérieure à une certaine température, nommée température de consigne. En variante, l'homme du métier pourra utiliser tout autre système permettant la commande et le contrôle d'une telle résistance électrique de chauffe.

Selon un mode de réalisation préféré, tel qu'illustré respectivement en figures 3 et 6, afin de faciliter le contrôle des débits de flux d'air, ledit dispositif de renouvellement et de traitement de l'air 100 peut comporter des ventilateurs. Comme illustré en figure 6, un tel dispositif 100 peut comporter un ventilateur principal 113 positionné en amont du premier échangeur thermique 111 au sein du premier compartiment 110. Toutefois, ledit ventilateur principal 113 peut aussi être placé en amont du premier échangeur thermique 111 au sein du troisième compartiment 130 ou même en aval du premier échangeur thermique 111 au sein du premier compartiment 110. Un tel ventilateur principal 113 permet d'assurer la liaison fluidique entre le troisième compartiment 130 et le premier compartiment 110, en acheminant vers le premier échangeur thermique 111 le mélange d'air neuf AN provenant du deuxième échangeur thermique 141 et l'air recyclé AR provenant de l'entrée d'air recyclé EAR. Ledit ventilateur principal 113 permet en outre d'éjecter l'air traité AT vers la sortie d'air traité SAT afin d'insuffler de l'air traité et/ou assaini dans ladite construction ou ledit bâtiment. Comme illustré en figure 3, le dispositif de renouvellement et de traitement de l'air peut comporter en outre un ventilateur d'éjection d'air vicié 161 et un ventilateur d'aspiration d'air neuf 162. Ledit ventilateur d'éjection d'air vicié 161 permet d'éjecter l'air vicié AV provenant du deuxième échangeur thermique 141 ou du conduit de dérivation 153 vers la sortie d'air vicié SAV. Ledit ventilateur d'aspiration de l'air neuf 162, quant à lui, permet d'assurer une liaison fluidique soit entre le quatrième compartiment 140 et le troisième compartiment 130 en aspirant l'air neuf AN provenant du deuxième échangeur thermique 141 soit entre le cinquième compartiment 150 et le troisième compartiment 130 en aspirant l'air neuf AN provenant du conduit de dérivation 151 afin d'acheminer l'air neuf AN jusqu'au troisième compartiment 130. L'air neuf AN, une fois acheminé dans le troisième compartiment 130, est renvoyé avec l'air recyclé AR jusqu'au premier échangeur thermique 111 par l'intermédiaire, par exemple, du ventilateur principal 113, comme décrit précédemment dans la présente description. Ledit ventilateur d'aspiration de l'air neuf 162 peut être optionnel au sein dudit dispositif 100 conforme à l'invention dans le cas où ledit dispositif 100 contrôle le débit d'air associé à l'air neuf AN et ledit ventilateur principal 113 suffit à l'aspiration du débit d'air associé à l'air neuf AN pour acheminer l'air neuf AN jusqu'au troisième compartiment 130. À titre d'exemple non limitatif, lesdits ventilateurs 113, 161 et/ou 162 peuvent consister en des ventilateurs centrifuges. En variante, l'homme du métier ne saurait se limiter à ce seul type de ventilateur précité et pourra utiliser tout autre type de ventilateur, tel que par exemple des ventilateurs hélicoïdaux, ou bien même utiliser tout autre type de technologie permettant la circulation des flux d'air au sein dudit dispositif 100 et le contrôle de leur débit.

Par ailleurs, lorsque les surfaces des premier 111 et deuxième 141 échangeurs thermiques sont froides, à savoir présentant une température inférieure à la température de rosée de l'air circulant à travers les échangeurs thermiques, la vapeur d'eau contenue dans l'air circulant se refroidit créant à la surface des échangeurs thermiques des gouttelettes d'eau, communément appelées condensats. De tels condensats peuvent se manifester par un goutte-à-goutte au sein du dispositif 100 pouvant engendrer une oxydation des éléments constitutifs dudit dispositif 100. Une telle oxydation peut endommager le fonctionnement dudit dispositif 100. Ainsi, pour éviter toute altération du bon fonctionnement dudit dispositif 100, en complément, le dispositif de renouvellement et de traitement de l'air 100 peut comporter des unités de récupération des condensats pour chaque échangeur thermique. À cet effet, tel qu'illustré sur les figures 2 et 7, le premier échangeur thermique 111 dispose d'une première unité de récupération des condensats 112 positionnée dans le premier compartiment 110 en-dessous dudit premier échangeur thermique 111. Le deuxième échangeur thermique 141, quant à lui, dispose d'une deuxième unité de récupération des condensats 142 positionnée dans le quatrième compartiment 140 en-dessous dudit deuxième échangeur thermique 141. Cette deuxième unité de récupération des condensats 142 dispose d'une sortie d'évacuation des condensats vers l'extérieur dudit dispositif 100 se matérialisant, par exemple, par un tuyau 145 raccordé à ladite deuxième unité de récupération des condensats 142 et se vidant vers le sol à l'extérieur dudit dispositif 100. À titre d'exemple non limitatif, de telles unité de récupération des condensats 112 et 142 peuvent consister en des bacs de récupération des condensats permettant d'accueillir l'écoulement de la vapeur d'eau. L'invention ne saurait être limitée à ces seuls exemples d'unité de récupération de condensats précédemment mentionnés.

Selon le mode de réalisation préféré, tel qu'illustré sur la figure 7, dans un souci de mutualisation des éléments constitutifs dudit dispositif 100, et grâce à la structure verticale dudit dispositif 100 permettant de disposer de deux échangeurs thermiques 111 et 141 l'un au-dessus de l'autre, la première unité de récupération des condensats 112 peut disposer d'une sortie se déversant par gravité dans la deuxième unité de récupération des condensats 142. Une telle sortie peut se matérialiser, par exemple, par un tuyau 143 raccordé à la première unité de récupération des condensats 112 et se déversant dans la deuxième unité de récupération des condensats 142. À cet effet, il est possible de collecter l'ensemble des condensats provenant des premier 111 et deuxième 141 échangeurs thermiques dans la deuxième unité de récupération des condensats 142. L'ensemble des condensats peut ainsi être évacué vers l'extérieur dudit dispositif 100 à travers une seule sortie d'évacuation correspondant à la sortie de la deuxième unité de récupération des condensats 142. Une telle structuration peut s'avérer particulièrement avantageuse par rapport aux dispositifs de renouvellement et de traitement d'air connus puisqu'elle permet d'économiser une sortie d'évacuation des condensats.

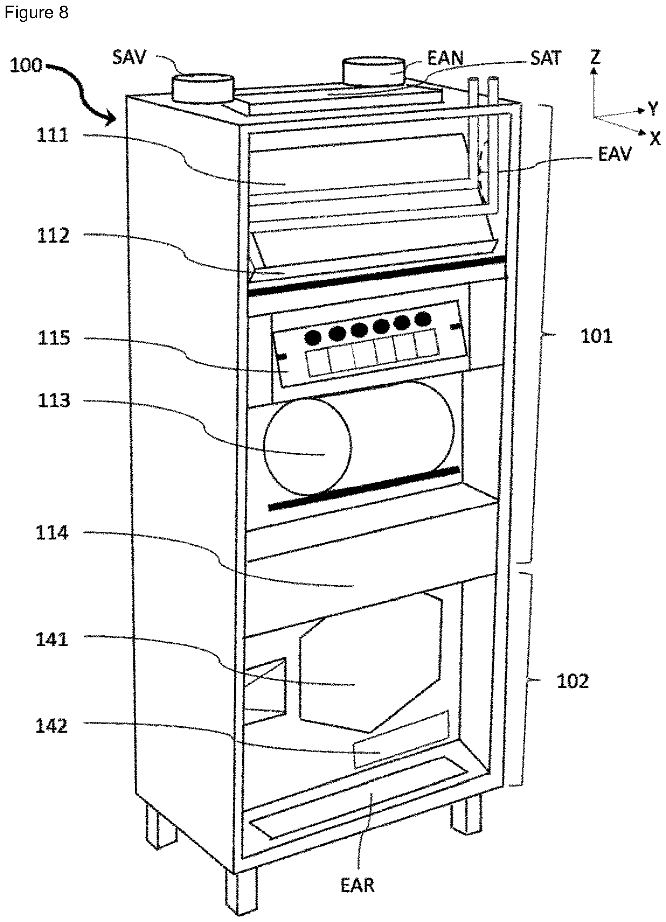

De manière optionnelle, dans une approche écologique et économique, la première unité de récupération des condensats 112 peut être agencée pour se déverser sur le deuxième échangeur thermique 141 afin de refroidir ledit deuxième échangeur thermique 141 et ainsi bénéficier d'un refroidissement adiabatique. Un tel agencement peut se matérialiser, par exemple illustré en figure 7, par un tuyau 144 raccordé au tuyau 143, par une électrovanne 146 afin de déverser les condensats provenant du premier échangeur thermique 111 sur le deuxième échangeur thermique 141. À cet effet, les condensats provenant du premier échangeur thermique 111 se déversent sur le deuxième échangeur thermique 141 et assurent un rôle d'humidificateur sur le deuxième échangeur thermique 141. En été ou en saison chaude, l'air neuf AN « chaud » passe à travers le deuxième échangeur thermique 141 « humidifié ». L'eau issue des condensats, provenant du premier échangeur thermique 111, va ainsi s'évaporer dans le deuxième échangeur thermique 141 et, lors de son évaporation, cette eau va absorber les calories présentes dans l'air neuf AN « chaud », ce qui va avoir pour conséquence de refroidir/rafraîchir ledit deuxième échangeur thermique 141 et donc ledit air neuf AN. Cette variante permet notamment en été ou en saison chaude de faciliter le refroidissement de l'air neuf AN sans énergie supplémentaire et ainsi de disposer d'un refroidissement supplémentaire en recyclant/réutilisant les condensats destinés à être évacués dudit dispositif 100. Le choix d'acheminement des condensats, provenant de la première unité de récupération des condensats 112, vers le deuxième échangeur thermique 141 ou vers la deuxième unité de récupération des condensats 142 peut être commandé, par exemple, par une vanne 146, elle-même pilotée par un panneau de commande 115 qui sera décrit plus loin dans la présente description en lien avec la figure 8.

De par son dimensionnement et sa structure tridimensionnelle, tel qu'illustré en figure 8, ledit dispositif de renouvellement et de traitement de l'air 100 peut comporter en outre un système de filtration 114 en face avant dudit dispositif selon l'axe X défini en figure 1. Ledit système de filtration 114 est positionné entre le troisième compartiment 130 et le premier compartiment 110 en amont du ventilateur principal 113 et du premier échangeur thermique 111. La place disponible et réservée pour intégrer le système de filtration 114 permet de disposer d'une filtration évolutive avec la possibilité par exemple d'avoir un empilement de plusieurs étages de filtration, selon l'axe Z défini en figure 1, accordant un plus grand volume filtrant tout en occupant un minimum de volume au sein dudit dispositif 100. Par ailleurs, le positionnement dudit système de filtration 114 en face avant dudit dispositif 100 permet de faciliter la maintenance dudit système de filtration 114. Un tel système de filtration 114 permet d'assainir le mélange d'air neuf AN et d'air recyclé AR avant leur passage par le ventilateur principal 113 puis dans le premier échangeur thermique 111. Ledit dispositif 100 conforme à l'invention peut ainsi insuffler de l'air traité AT assaini à l'intérieur de la construction ou du bâtiment. Un tel système de filtration 114 permet de séparer les particules en suspension dans l'air notamment les particules fines et peut être constitué de filtres à particules tels que, par exemple, ceux décrits dans la demande de brevet déposée le 23 janvier 2020 sous le numéro FR2000639.

En complément, afin de prévenir les risques d'encrassement pouvant traduire des effets négatifs sur les performances dudit dispositif 100, ledit dispositif 100 peut comporter en outre des filtres de protection avant tout passage des flux d'air dans le deuxième échangeur thermique 141 tant pour les flux d'air neuf AN que pour les flux d'air vicié AV. De tels filtres de protection sont positionnés en amont du deuxième échangeur thermique 141 et en aval de l'entrée d'air neuf EAN et/ou de l'entrée d'air vicié EAV, soit dans le deuxième compartiment 120, soit dans le quatrième compartiment 140. À titre d'exemple non limitatif, les filtres de protection peuvent être constitués en polyéthylène haute densité ou tout autre matériau adapté pour limiter l'introduction de tout polluant extérieur risquant d'endommager et/ou limiter les performances dudit dispositif 100. En variante, lesdits filtres de protection peuvent également être constitués de filtres à particules, tels que mentionnés précédemment dans la présente description, afin d'assurer un pré-filtrage de l'air neuf AN entrant par l'entrée d'air neuf EAN pour limiter l'introduction de matières particulaires au sein dudit dispositif 100.

De manière optionnelle, afin de contrôler et piloter le dispositif de renouvellement et de traitement de l'air 100, ledit dispositif 100 peut comporter un panneau de commande 115. Tel qu'illustré en figure 8, un tel panneau de commande 115 est positionné entre le premier échangeur thermique 111 et le ventilateur principal 113. Ce positionnement dudit panneau de commande 115 est possible du fait du gain de place obtenu par la présence d'un conduit d'air étroit pour acheminer le mélange d'air neuf AN et d'air recyclé AR vers le premier échangeur thermique 111. Un tel dimensionnement de ce conduit d'air est possible du fait de la présence du ventilateur principal 113 entraînant une forte accélération du mélange d'air neuf AN et d'air recyclé AR. Ledit panneau de commande 115 est agencé pour piloter ledit dispositif 100 et ses éléments constitutifs dans leur globalité. Il est composé de divers affichages, tels que, par exemple, des écrans, voyants et/ou indicateurs permettant la surveillance du fonctionnement du dispositif 100 et d'éléments permettant de réguler ce fonctionnement et de piloter des opérations telles que, par exemple, la mise en route et l'arrêt du dispositif 100, la gestion et le contrôle des débits d'air par les ventilateurs 113, 161 et/ou 162, la gestion de l'ouverture et/ou la fermeture du clapet 152 ou 154, le contrôle de la vanne 146 ou bien le réglage de la température de consigne du thermostat électronique de la résistance électrique de chauffe. Les exemples cités précédemment sont donnés à titre informatif et non limitatif, un tel panneau de commande pouvant piloter tout autre élément constitutif et/ou tout autre opération dudit dispositif 100. Un tel panneau de commande 115 permet notamment d'ajuster le fonctionnement de chacun des premier 111 et deuxième 141 échangeurs thermiques afin d'optimiser la consommation d'énergie attenante audit dispositif 100.

La présente divulgation décrit un dispositif de renouvellement et de traitement d'air 100 en réalisation verticale selon un mode de réalisation préféré. Toutefois, il sera apprécié de l'homme du métier que, pour une même réalisation verticale dudit dispositif 100, il est possible d'intervertir la zone basse avec la zone haute et/ou d'inverser l'avant avec l'arrière dudit dispositif 100. La disposition des différents éléments décrits dans la présente description peut ainsi être échangée, l'important étant de conserver la structure tridimensionnelle compacte proposant un système replié sur lui-même avec des conduits d'air positionnés en parallèle des échangeurs thermiques. En outre, il est également possible d'envisager une réalisation horizontale dudit dispositif 100. Dans un tel cas, il conviendra d'intervertir les notions de haut et de bas par la gauche et la droite et de plan vertical par plan horizontal.

## Revendications

1. Dispositif de renouvellement et de traitement de l'air (100) comportant :
- des premier (111) et deuxième (141) échangeurs thermiques, et
- une pluralité de conduits d'air (121, 122, 123 et 131),
étant **caractérisé en ce que** ledit dispositif a une structure tridimensionnelle comportant au moins :
- une zone haute (101) divisée verticalement en au moins des premier (110) et deuxième (120) compartiments ;
- une zone basse (102) divisée verticalement en au moins des troisième (130) et quatrième (140) compartiments ;
- ledit premier compartiment (110) comportant le premier échangeur thermique (111) et une sortie d'air traitée (SAT) ;
- ledit troisième compartiment (130) comportant au moins un conduit d'air (131) auquel est connectée une entrée d'air recyclée (EAR) et communicant fluidiquement avec ledit premier compartiment (110) ;
- ledit quatrième compartiment (140) comportant le deuxième échangeur thermique (141) et communicant fluidiquement avec le troisième compartiment (130) ;
- ledit deuxième compartiment (120) comportant un premier conduit d'air (121) auquel est connectée une entrée d'air neuf (EAN) et un deuxième conduit d'air (122) auquel est connectée une entrée d'air vicié (EAV) et communicant fluidiquement avec ledit quatrième compartiment (140) ;
- le premier échangeur thermique (111) étant un échangeur thermique à tubes réchauffant et/ou refroidissant un mélange d'air provenant du troisième compartiment (130) et ledit mélange étant ensuite insufflé par la sortie d'air traitée (SAT) ;
- le deuxième échangeur thermique (141) étant un échangeur thermique à double flux récupérant l'énergie d'un air vicié (AV) entrant par ladite entrée d'air vicié (EAV) et acheminé par le deuxième conduit (122) pour réchauffer et/ou refroidir un air neuf (AN) entrant par l'entrée d'air neuf (EAN) et acheminé par le premier conduit (121) ;
- le mélange d'air provenant du troisième compartiment (130) correspondant à un mélange de l'air neuf (AN) provenant du deuxième échangeur thermique (141) et d'un air recyclé (AR) provenant de l'entrée d'air recyclé (EAR).

2. Dispositif de renouvellement et de traitement de l'air (100) selon la revendication précédente, pour lequel ladite zone basse (102) comporte un cinquième compartiment (150) disposé en parallèle des troisième (130) et quatrième (140) compartiments dudit dispositif (100), constituant un conduit de dérivation (151) d'air neuf (AN), provenant du premier conduit d'air (121) relié à l'entrée d'air neuf (EAN), assurant une communication directe entre le deuxième (120) et le troisième (130) compartiment court-circuitant le deuxième échangeur thermique (141), l'ouverture et/ou la fermeture dudit conduit de dérivation (151) étant pilotée par un clapet (152).

3. Dispositif de renouvellement et de traitement de l'air (100) selon la revendication 1, pour lequel ladite zone basse (102) comporte un cinquième compartiment (150) disposé en parallèle des troisième (130) et quatrième (140) compartiments dudit dispositif (100), constituant un conduit de dérivation (153) d'air vicié (AV), provenant du deuxième conduit d'air (122) relié à l'entrée d'air vicié (EAV) permettant à l'air vicié (AV) d'être acheminé vers un troisième conduit d'air (123) relié à une sortie d'air vicié (SAV) connectée au deuxième compartiment 120, évitant le passage de l'air vicié (AV) dans le deuxième échangeur thermique (141).

4. Dispositif de renouvellement et de traitement de l'air (100) selon l'une des revendications précédentes, comportant un ventilateur d'éjection de l'air vicié (161) vers une sortie d'air vicié (SAV) connectée au deuxième compartiment (120) et un ventilateur d'aspiration de l'air neuf (162) vers le troisième compartiment (130).

5. Dispositif de renouvellement et de traitement de l'air (100) selon l'une des revendications précédentes, pour lequel le deuxième compartiment (120) est modulable et permet des raccordements selon l'endroit d'implémentation dudit dispositif en positionnant des entrées et/ou sorties d'air (EAN, EAV et/ou SAV) connectées auxdits conduits (121, 122 et 123) du deuxième compartiment (120) vers le haut, vers l'arrière ou sur le côté à gauche ou à droite.

6. Dispositif de renouvellement et de traitement de l'air (100) selon l'une des revendications précédentes, pour laquelle le premier échangeur thermique (111) comporte une résistance électrique de chauffe.

7. Dispositif de renouvellement et de traitement de l'air (100) selon l'une des revendications précédentes, comportant une première unité de récupération des condensats (112) produits par le premier échangeur thermique (111) et une deuxième unité de récupération des condensats (142) produits par le deuxième échangeur thermique (141), pour lequel la première unité de récupération des condensats (112) dispose d'une sortie pour se déverser dans la deuxième unité de récupération des condensats (142), ladite deuxième unité (142) comportant une sortie d'évacuation des condensats vers l'extérieur dudit dispositif (100).

8. Dispositif de renouvellement et de traitement de l'air (100) selon la revendication 7, pour lequel la première unité de récupération des condensats (112) est agencée pour se déverser sur le deuxième échangeur thermique (141).

9. Dispositif de renouvellement et de traitement de l'air (100) selon l'une des revendications précédentes, pour lequel ledit dispositif (100) comporte un ventilateur principal (113) pour assurer la liaison fluidique entre le troisième (130) et le premier (110) compartiment en acheminant vers le premier échangeur thermique (111) le mélange d'air neuf (AN) et d'air recyclé (AR) provenant de l'entrée d'air recyclé (EAR) du troisième compartiment (130) pour éjecter ledit mélange vers la sortie d'air traitée (SAT) connectée au premier compartiment (110).

10. Dispositif de renouvellement et de traitement de l'air (100) selon la revendication précédente, pour lequel le premier compartiment (110) comporte un panneau de commande (115), positionné entre le premier échangeur thermique (111) et le ventilateur principal (113) et agencé pour piloter ledit dispositif (100).

11. Dispositif de renouvellement et de traitement de l'air (100) selon la revendication 9 ou 10, comportant un système de filtration (114) positionné entre le troisième (130) et le premier (110) compartiment en amont du ventilateur principal (113) et du premier échangeur thermique (111).

## Patentansprüche

1. Vorrichtung (100) zur Lufterneuerung und -aufbereitung, die Folgendes umfasst:
- einen ersten (111) und einen zweiten (141) Wärmetauscher, und
- eine Vielzahl von Luftkanäle (121, 122, 123 und 131),
**dadurch gekennzeichnet, dass** die genannte Vorrichtung eine dreidimensionale Struktur aufweist, die mindestens Folgendes umfasst:
- eine obere Zone (101), die vertikal in mindestens eine erste (110) und eine zweite (120) Kammer unterteilt ist;
- eine untere Zone (102), die vertikal in mindestens eine dritte (130) und eine vierte (140) Kammer unterteilt ist;
- wobei die genannte erste Kammer (110) den ersten Wärmetauscher (111) und einen Aufbereitungsluftauslass (SAT) umfasst;
- wobei die genannte dritte Kammer (130) mindestens einen Luftkanal (131) umfasst, mit dem ein Umlufteinlass (EAR) verbunden ist und der mit der genannten ersten Kammer (110) in Fluidverbindung steht;
- wobei die genannte vierte Kammer (140) den zweiten Wärmetauscher (141) umfasst und mit der dritten Kammer (130) in Fluidverbindung steht;
- wobei die genannte zweite Kammer (120) einen ersten Luftkanal (121), mit dem ein Frischlufteinlass (EAN) verbunden ist, und einen zweiten Luftkanal (122) umfasst, mit dem ein Ablufteinlass (EAV) verbunden ist und der mit der genannten vierten Kammer (140) in Fluidverbindung steht;
- wobei der erste Wärmetauscher (111) ein Rohrwärmetauscher ist, der ein Luftgemisch aus der dritten Kammer (130) erwärmt und/oder kühlt, und wobei das genannte Gemisch anschließend durch den Aufbereitungsluftauslass (SAT) eingeblasen wird;
- wobei der zweite Wärmetauscher (141) ein Doppelstrom-Wärmetauscher ist, der die Energie von Abluft (AV), die durch den genannten Ablufteinlass (EAV) eintritt und durch den zweiten Kanal (122) geleitet wird, zurückgewinnt, um Frischluft (AN), die durch den Frischlufteinlass (EAN) eintritt und durch den ersten Kanal (121) geleitet wird, zu erwärmen und/oder zu kühlen;
- wobei das Luftgemisch aus der dritten Kammer (130) einem Gemisch aus der Frischluft (AN) aus dem zweiten Wärmetauscher (141) und einer Umluft (AR) aus dem Umlufteinlass (EAR) entspricht.

2. Vorrichtung (100) zur Lufterneuerung und -aufbereitung nach dem vorherigen Anspruch, wobei die genannte untere Zone (102) eine fünfte Kammer (150) umfasst, die parallel zur dritten (130) und vierten (140) Kammer der genannten Vorrichtung (100) angeordnet ist und einen Umleitungskanal (151) für Frischluft (AN) bildet, die aus dem mit dem Frischlufteinlass (EAN) verbundenen ersten Luftkanal (121) kommt, der eine direkte Verbindung zwischen der zweiten (120) und der dritten (130) Kammer herstellt, die den zweiten Wärmetauscher (141) kurzschließt, wobei das Öffnen und/oder das Schließen des genannten Umleitungskanals (151) durch ein Ventil (152) gesteuert wird.

3. Vorrichtung (100) zur Lufterneuerung und -aufbereitung nach Anspruch 1, wobei die genannte untere Zone (102) eine fünfte Kammer (150) umfasst, die parallel zur dritten (130) und vierten (140) Kammer der genannten Vorrichtung (100) angeordnet ist und einen Umleitungskanal (153) für Abluft (AV) bildet, die aus dem mit dem Ablufteinlass (EAV) verbundenen zweiten Luftkanal (122) kommt, so dass die Abluft (AV) in einen dritten Luftkanal (123) geleitet werden kann, der mit einem Abluftauslass (SAV) verbunden ist, der mit der zweiten Kammer 120 verbunden ist, so dass der Durchgang der Abluft (AV) durch den zweiten Wärmetauscher (141) verhindert wird.

4. Vorrichtung (100) zur Lufterneuerung und -aufbereitung nach einem der vorherigen Ansprüche, die einen Ventilator zum Ausstoßen von Abluft (161) in Richtung eines mit der zweiten Kammer (120) verbundenen Abluftauslasses (SAV) und einen Ventilator zum Ansaugen von Frischluft (162) in Richtung der dritten Kammer (130) umfasst.

5. Vorrichtung (100) zur Lufterneuerung und -aufbereitung nach einem der vorherigen Ansprüche, wobei die zweite Kammer (120) modular ist und Anschlüsse je nach dem Ort der Implementierung der genannten Vorrichtung ermöglicht, indem Luftein- und/oder -auslässe (EAN, EAV und/oder SAV), die mit den genannten Kanälen (121, 122 und 123) der zweiten Kammer (120) verbunden sind, nach oben, nach hinten oder auf der linken oder rechten Seite positioniert werden.

6. Vorrichtung (100) zur Lufterneuerung und -aufbereitung nach einem der vorherigen Ansprüche, wobei der erste Wärmetauscher (111) einen elektrischen Heizwiderstand umfasst.

7. Vorrichtung (100) zur Lufterneuerung und -aufbereitung nach einem der vorherigen Ansprüche, die eine erste Einheit zur Rückgewinnung von vom ersten Wärmetauscher (111) erzeugtem Kondensat (112) und eine zweite Einheit zur Rückgewinnung von vom zweiten Wärmetauscher (141) erzeugtem Kondensat (142) umfasst, wobei die erste Kondensatrückgewinnungseinheit (112) einen Auslass zum Ablassen in die zweite Kondensatrückgewinnungseinheit (142) hat, wobei die genannte zweite Einheit (142) einen Kondensatabflussauslass zur Außenseite der genannten Vorrichtung (100) umfasst.

8. Vorrichtung (100) zur Lufterneuerung und -aufbereitung nach Anspruch 7, wobei die erste Kondensatrückgewinnungseinheit (112) zum Ablassen auf den zweiten Wärmetauscher (141) angeordnet ist.

9. Vorrichtung (100) zur Lufterneuerung und -aufbereitung nach einem der vorherigen Ansprüche, wobei die genannte Vorrichtung (100) einen Hauptventilator (113) umfasst, um die Fluidverbindung zwischen der dritten (130) und der ersten (110) Kammer herzustellen, indem das Gemisch aus Frischluft (AN) und Umluft (AR) aus dem Umlufteinlass (EAR) der dritten Kammer (130) zum ersten Wärmetauscher (111) geleitet wird, um das genannte Gemisch zu dem mit der ersten Kammer (110) verbundenen Aufbereitungsluftauslass (SAT) auszustoßen.

10. Vorrichtung (100) zur Lufterneuerung und -aufbereitung nach dem vorherigen Anspruch, wobei die erste Kammer (110) ein Bedienfeld (115) umfasst, das zwischen dem ersten Wärmetauscher (111) und dem Hauptventilator (113) positioniert und zum Steuern der genannten Vorrichtung (100) angeordnet ist.

11. Vorrichtung (100) zur Lufterneuerung und -aufbereitung nach Anspruch 9 oder 10, die ein Filtersystem (114) umfasst, das zwischen der dritten (130) und der ersten (110) Kammer stromaufwärts des Hauptventilators (113) und des ersten Wärmetauschers (111) positioniert ist.

## Claims

1. Air renewal and treatment device (100) comprising:
- first (111) and second (141) heat exchangers, and
- a plurality of air ducts (121, 122, 123 and 131),
being **characterized in that** said device has a three-dimensional structure comprising at least:
- an upper zone (101) divided vertically into at least first (110) and second (120) compartments;
- a lower zone (102) divided vertically into at least third (130) and fourth (140) compartments;
- said first compartment (110) comprising the first heat exchanger (111) and a treated air outlet (SAT);
- said third compartment (130) comprising at least one air duct (131) to which a recycled air inlet (EAR) is connected and in fluid communication with said first compartment (110);
- said fourth compartment (140) comprising the second heat exchanger (141) and in fluid communication with the third compartment (130);
- said second compartment (120) comprising a first air duct (121) to which a fresh air inlet (EAN) is connected and a second air duct (122) to which a foul air inlet (EAV) is connected and in fluid communication with said fourth compartment (140);
- the first heat exchanger (111) being a tube heat exchanger heating and/or cooling a mixture of air originating from the third compartment (130) and said mixture then being injected via the treated air outlet (SAT);
- the second heat exchanger (141) being a double-flow heat exchanger recovering energy from a foul air (AV) entering via said foul air inlet (EAV) and conveyed via the second duct (122) to heat and/or cool a fresh air (AN) entering via the fresh air inlet (EAN) and conveyed via the first duct (121);
- the mixture of air originating from the third compartment (130) corresponding to a mixture of the fresh air (AN) originating from the second heat exchanger (141) and from a recycled air (AR) originating from the recycled air inlet (EAR).

2. Air renewal and treatment device (100) according to the preceding claim, for which said lower zone (102) comprises a fifth compartment (150) arranged parallel to the third (130) and fourth (140) compartments of said device (100), constituting a by-pass duct (151) of fresh air (AN), originating from the first air duct (121) connected to the fresh air inlet (EAN), providing a direct communication between the second (120) and the third (130) compartment short-circuiting the second heat exchanger (141), the opening and/or the closing of said by-pass duct (151) being controlled by a valve (152).

3. Air renewal and treatment device (100) according to claim 1, for which said lower zone (102) comprises a fifth compartment (150) arranged parallel to the third (130) and fourth (140) compartments of said device (100), constituting a by-pass duct (153) of foul air (AV), originating from the second air duct (122) connected to the foul air inlet (EAV) allowing the foul air (AV) to be conveyed to a third air duct (123) connected to a foul air outlet (SAV) connected to the second compartment 120, avoiding the passage of the foul air (AV) into the second heat exchanger (141).

4. Air renewal and treatment device (100) according to one of the preceding claims, comprising a fan ejecting foul air (161) to a foul air outlet (SAV) connected to the second compartment (120) and a fan drawing fresh air (162) to the third compartment (130).

5. Air renewal and treatment device (100) according to one of the preceding claims, the second compartment (120) of which is modular and allows connections according to the installation site of said device, by positioning the air inlets and/or outlets (EAN, EAV and/or SAV) connected to said ducts (121, 122 and 123) of the second compartment (120) upwards, rearwards, or on the left or right side.

6. Air renewal and treatment device (100) according to one of the preceding claims, for which the first heat exchanger (111) comprises an electrical heating resistance.

7. Air renewal and treatment device (100) according to one of the preceding claims, comprising a first recovery unit of the condensates (112) produced by the first heat exchanger (111) and a second recovery unit of the condensates (142) produced by the second heat exchanger (141), for which the first recovery unit of the condensates (112) has an outlet for discharging into the second recovery unit of the condensates (142), said second unit (142) comprising an outlet for draining the condensates to outside said device (100).

8. Air renewal and treatment device (100) according to claim 7, for which the first recovery unit of the condensates (112) is arranged to discharge to the second heat exchanger (141).

9. Air renewal and treatment device (100) according to one of the preceding claims, for which said device (100) comprises a main fan (113) for providing the fluidic connection between the third (130) and the first (110) compartment by conveying to the first heat exchanger (111) the mixture of fresh air (AN) and recycled air (AR) originating from the recycled air inlet (EAR) of the third compartment (130) for ejecting said mixture to the treated air outlet (SAT) connected to the first compartment (110).

10. Air renewal and treatment device (100) according to the preceding claim, for which the first compartment (110) comprises a control panel (115), positioned between the first heat exchanger (111) and the main fan (113) and arranged for controlling said device (100).

11. Air renewal and treatment device (100) according to claim 9 or 10, comprising a filtration system (114) positioned between the third (130) and the first (110) compartment upstream of the main fan (113) and the first heat exchanger (111).
